# EUROPÄISCHE PATENTSCHRIFT

(11) **EP 4 163 186 B1**
(45) Veröffentlichungstag und Bekanntmachung des Hinweises auf die Patenterteilung: **09.04.2025**
(21) Anmeldenummer: 22196928.0
(22) Anmeldetag: 21.09.2022
(51) Int. Cl.: F15B 7/00, B62D 5/06

(54) **HYDRAULISCHE ODER PNEUMATISCHE PUMPE**
HYDRAULIC OR PNEUMATIC PUMP
POMPE HYDRAULIQUE OU PNEUMATIQUE

(30) Priorität: 07.10.2021 DE 102021126101
(43) Veröffentlichungstag der Anmeldung: 12.04.2023
(73) Patentinhaber: WEBER-HYDRAULIK GMBH, 84109 Wörth a.d. Isar (DE)
(72) Erfinder: Gattinger, Johannes, 84028 Landshut (DE); Gürster, Richard, 84051 Essenbach (DE); Weiß, Hans-Wilhelm, 79879 Wutach-Lembach (DE)
(74) Vertreter: LBP Lemcke, Brommer & Partner Patentanwälte mbB

(56) Entgegenhaltungen:
- EP-A2- 1 270 938
- WO-A1-2019/146957
- DE-A1- 3 833 484
- DE-B2- 1 728 016

## Beschreibung

Die vorliegende Erfindung betrifft eine Pumpe für einen Hydraulik- oder Pneumatikzylinder mit zwei druckbeaufschlagbaren Arbeitsräumen, insbesondere für einen Lenkzylinder.

Bei hydraulischen Lenksystemen besteht der Wunsch, die Lenkung auch bei einem Defekt, zum Beispiel bei Ausfall der Druckversorgungseinheit oder einem Leitungsbruch, von Hand bewegen zu können, insbesondere in eine Geradeausstellung. Dies kann über eine handbetätigbare Notpumpe geschehen. Eine solche Handpumpe hat üblicherweise einen Pumpenraum und ein darin bewegliches Pumpelement, welches über eine Handbetätigungsvorrichtung, etwa einen Hebel, angesteuert wird. Eine hydraulische Lenkung muss jedoch in zwei Richtungen auslenkbar sein. Entsprechend besitzt ein Lenkzylinder zwei Arbeitsräume mit zugehörigen Hydraulikanschlüssen für Druckleitungen. Die Handpumpe muss daher je nach gewünschter Lenkrichtung über ein Umschaltventil wechselweise mit einem der beiden Arbeitsräume verbunden werden. Dies macht die Notbedienung bzw. Handbedienung der Lenkung komplizierter und birgt die Gefahr einer Fehlbedienung. Vor allem bei einem Lenkzylinder, der im Fehlerfall in einer sicheren Mittelstellung arretiert werden muss, ist sicherzustellen, dass entsprechende Ventile zwischen Handpumpe und Lenkzylinder sowie Lenkzylinder und Tank am Ende der Notbetätigung wieder in eine sichere Stellung gebracht werden.

Eine gattungsgemäße Pumpe ist im Dokument DE 38 33 484 A1 offenbart.

Eine Aufgabe der Erfindung besteht darin, eine Pumpe zur Betätigung eines doppelwirkenden Hydraulikzylinders anzugeben, welche eine einfache und intuitive Bedienung ermöglicht. Darüber hinaus soll eine entsprechende hydraulische Schaltung mit einem doppelwirkenden Hydraulikzylinder und einer Pumpe zur Auslenkung des Kolbens in wahlweise die eine oder andere Hubrichtung angegeben werden.

Die Aufgabe wird hinsichtlich der Pumpe gelöst durch die Merkmale des Anspruchs 1 und hinsichtlich der hydraulischen Schaltung durch die Merkmale des Anspruchs 5. Vorteilhafte Ausgestaltungen sind den abhängigen Ansprüchen zu entnehmen.

Erfindungsgemäß ist vorgesehen, dass die Pumpe zwei Pumpenräume mit je einem in dem zugehörigen Pumpenraum beweglichen Pumpelement und ein die Pumpelemente ansteuerndes Betätigungselement aufweist, wobei jeder der beiden Pumpenräume einen mit jeweils einem der Arbeitsräume des zu betätigenden Hydraulikzylinders zu verbindenden Druckanschluss besitzt und das Betätigungselement mit den beiden Pumpelementen derart wirkverbunden ist, dass bei Auslenkung des Betätigungselements in eine erste Richtung nur ein erstes der beiden Pumpelemente und bei Auslenkung in eine zweite Richtung nur das zweite der Pumpelemente angesteuert wird. Das Betätigungselement kann vorzugsweise ein Hand- oder Fußbetätigungselement, alternativ jedoch auch oder ein hydraulisch, pneumatisch oder elektrisch angetriebener Aktuator sein bzw. von einem solchen angetrieben werden. Selbstverständlich kann die Pumpe auch mit mehr als zwei Pumpenräumen versehen sein. Beispielsweise kann die Pumpe mit doppelten Pumpzylindern, z.B. je zwei pro Seite bzw. Pumprichtung ausgestattet sein.

Indem für jeden Arbeitsraum ein separates Pumpelement vorgesehen ist, das richtungsabhängig über ein gemeinsames Betätigungselement angesteuert wird, ist die Auslenkungsrichtung des Kolbens fest mit der Auslenkungsrichtung des Betätigungselements verbunden. Auf zusätzliche Ventile zur Umschaltung der Pumprichtung kann somit verzichtet werden. Dies ermöglicht eine besonders einfache, intuitive und somit fehlerfreie Bedienung der Handpumpe. Die hydraulische Handpumpe kann vor allem bei hydraulischen Lenkungen eingesetzt werden, wenn Notlenkfunktionen gefordert werden. Die erfindungsgemäße Pumpe kann jedoch auch in anderen Systemen und Anwendungsbereichen eingesetzt werden, wenn ein doppelwirkender Hydraulikzylinder über eine Handpumpe verstellt werden soll. Die Handpumpe eignet sich hierbei besonders für einen Notbetrieb eines doppelwirkenden Hydraulikzylinders, wenn die eigentliche Verstellvorrichtung (zum Beispiel die Lenkung) ausgefallen ist. Die erfindungsgemäße Handpumpe kann jedoch in entsprechenden Anwendungen auch als alleinige Verstellvorrichtung für einen doppelwirkenden Hydraulikzylinder eingesetzt werden.

Erfindungsgemäß ist die Pumpe als Kolben- oder Plungerpumpe mit zwei separaten Pumpzylindern und zugehörigen Pumpkolben ausgebildet. Dieser Pumpentyp ist besonders robust, kompakt und leicht zu bedienen. Hierbei weisen die beiden Pumpzylinder jeweils einen mit einer Tankrückleitung zu verbindenden Seitenabgang im Bereich einer hinteren Endlage des zugehörigen Pumpkolbens auf, der freigegeben wird, wenn sich der Pumpkolben in seiner hinteren Endlage befindet. In der eingefahrenen Stellung der beiden Pumpkolben sind somit die Druckanschlüsse der Pumpenräume über den jeweiligen Seitenabgang zum Tank hin entlastet. Wird somit ein Pumpenkolben ausgelenkt und baut Druck in einem der Arbeitsräume des Hydraulikzylinders auf, so kann Hydraulikflüssigkeit aus dem anderen Arbeitszylinder über den anderen Pumpenraum zurück zum Tank strömen. Somit kann auf ein zusätzliches Ausspeiseventil verzichtet werden. Ein gewisser Leerhub, bis der Pumpkolben den jeweiligen Seitenabgang überstrichen hat und somit Druck aufgebaut wird, kann hierbei in Kauf genommen werden. Die Pumpe kann hierdurch besonders kompakt gebaut werden und der Verzicht auf zusätzliche Ventile zur Ausspeisung von Hydraulikflüssigkeit aus dem jeweils anderen Arbeitsraum führt zu einer sehr robusten und fehlerunanfälligen Schaltung.

Bevorzugt kann hierbei vorgesehen sein, dass die Pumpkolben ein integriertes Rückschlagventil oder eine nachsaugende Kolbendichtung aufweisen. Hierdurch kann in einem Totraum zwischen dem Seitenabgang und der hinteren Endlage des Pumpkolbens befindliches Hydraulikmedium bei einer Rückbewegung des Pumpkolbens verdrängt und/oder Hydraulikflüssigkeit nachgesaugt werden. Alternativ wäre auch ein zusätzlicher Tankentlastungsanschluss im rückwärtigen Raum des Pumpkolbens denkbar.

Für die richtungsabhängige Ankopplung eines Betätigungselements an die beiden Pumpelemente sind grundsätzlich beliebige, an sich bekannte mechanische Kopplungsvorrichtungen wie etwa Freiläufe, Rast- oder Klinkenanordnungen und dergleichen denkbar. Bei einer bevorzugten Ausführungsform kann das Betätigungselement als Hebel ausgeführt sein, der aus einer Mittelstellung in eine erste und eine entgegengesetzte zweite Richtung auslenkbar ist und hierbei je nach Auslenkungsrichtung entweder das erste oder das zweite Pumpelement ansteuert. Der Hebel kann hierbei die Pumpelemente vorzugsweise über einen Exzenter ansteuern. Dies ermöglicht einen mechanisch einfachen und robusten Aufbau ohne zusätzliche, bewegliche Komponenten.

Als weitere Verwendung der erfindungsgemäßen Pumpe wäre auch die Ansteuerung eines Hydromotors oder anderen Aktoren möglich und ist im Rahmen der vorliegenden Erfindung mit umfasst. Außerdem kann die Pumpe auch mit gleichem Wirkprinzip in pneumatischen Schaltungen zur Ansteuerung eines doppeltwirkenden Pneumatikzylinders eingesetzt werden.

Bei einer hydraulischen Schaltung für eine hydraulische Lenkung, mit einem Lenkzylinder, der einen Zylinderraum mit einem dichtend in dem Zylinderraum gelagerten Kolben, der den Zylinderraum in zwei Arbeitsräume unterteilt, und mindestens eine von dem Kolben getragene Kolbenstange umfasst, und mit einer Pumpe zur Auslenkung des Kolbens in wahlweise die eine oder andere Hubrichtung, ist erfindungsgemäß vorgesehen, dass die Pumpe zwei Pumpenräume mit je einem in dem zugehörigen Pumpenraum beweglichen Pumpelement und ein die Pumpelemente ansteuerndes Betätigungselement aufweist, wobei jeder der beiden Pumpenräume einen Druckanschluss besitzt und der Druckanschluss eines ersten der Pumpenräume mit einem ersten der Arbeitsräume des Lenkzylinders und der Druckanschluss des zweiten Pumpenraums mit dem zweiten Arbeitsraum verbunden sind und das Betätigungselement mit den beiden Pumpelementen derart wirkverbunden ist, dass bei Auslenkung des Betätigungselements in eine erste Richtung nur ein erstes der beiden Pumpelemente und bei Auslenkung in eine zweite Richtung nur das zweite der Pumpelemente angesteuert wird. Die Pumpe dient dem Not- bzw. Handbetrieb im Falle eines Ausfalls in einem hydraulischen Primärkreislauf der Lenkung.

Über entsprechende Anschlüsse wird der Lenkzylinder im Betrieb mit dem hydraulischen Primärkreislauf der Lenkung verbunden. Wesentlich ist hierbei, dass in den beiden von den Pumpenräumen zu den Arbeitsräumen führenden Druckleitungen jeweils ein in Richtung des jeweiligen Arbeitsraums öffnendes, hydraulisch entsperrbares Rückschlagventil angeordnet ist, wobei Steueranschlüsse der beiden Rückschlagventile über Kreuz mit der jeweils anderen Druckleitung verbunden sind. Hierdurch wird sichergestellt, dass der hydraulischen Primärkreislauf von der hydraulischen Schaltung, d.h. von der für den Notbetrieb vorgesehenen Handpumpe entkoppelt ist. Die Pumpe kann somit in Ruhestellung keinen Einfluss auf den Lenkzylinder nehmen und ein hydraulischer Druck im Primärkreislauf zur Auslenkung des Lenkzylinders wirkt sich nicht auf die Pumpe und die zugehörige hydraulische Schaltung aus, da die zum Lenkzylinder führenden Druckleitungen dicht abgesperrt sind.

Es wird eine Pumpe der eingangs genannten Art eingesetzt, bei der die beiden Pumpzylinder jeweils einen mit einer Tankrückleitung zu verbindenden Seitenabgang im Bereich einer hinteren Endlage des zugehörigen Pumpkolbens aufweisen, der freigegeben wird, wenn sich der Pumpkolben in seiner hinteren Endlage befindet. In der eingefahrenen Stellung der beiden Pumpkolben sind somit die Druckanschlüsse der Pumpenräume über den jeweiligen Seitenabgang zum Tank hin entlastet. Somit kann bei einer Auslenkung des einen Pumpenkolbens zur Druckbeaufschlagung des einen der Arbeitsräume des Lenkzylinders Hydraulikflüssigkeit aus dem anderen Arbeitsraum über den anderen, nicht betätigten Pumpzylinder zurück zum Tank strömen.

Die beiden entsperrbaren Rückschlagventile können hierbei insbesondere in Form eines sogenannten Zwillings-entsperrbaren Rückschlagventils integriert sein, das heißt in Form gegenüberliegender Rückschlagventile mit einem gemeinsamen Steuerkolben. Dies kann vorteilhaft sein, da dann zum Aufsteuern eines der Rückschlagventile die Druckdifferenz in den von der Pumpe kommenden Druckleitungen ausschlaggebend ist. Somit wird sichergestellt, dass immer nur eines der beiden entsperrbaren Rückschlagventile in entsperrter Stellung sein kann.

Zusätzlich oder alternativ kann vorgesehen sein, dass die beiden hydraulisch entsperrbaren Rückschlagventile als Wechselventile mit jeweils einem zweiten Druckanschluss ausgeführt sind. An die beiden zweiten Druckanschlüsse der Wechselventile kann hierbei zum Beispiel eine hydraulische Lenkungsschaltung mit einer Druckversorgungseinheit angeschlossen werden, über die die Arbeitsräume des Lenkzylinders im Normalbetrieb gesteuert mit Hydraulikdruck beaufschlagt werden können. Durch die zusätzliche integrierte Wechselventilfunktionalität wird sichergestellt, dass bei Betrieb der Handpumpe in einem Fehlerfall die eigentliche Lenkungsschaltung und deren Druckversorgungseinheit von dem Lenkzylinder abgesperrt ist. Im Not- oder Handbetrieb werden somit jegliche Undichtigkeitsfehler in der eigentlichen Lenkungsschaltung bzw. Steuerschaltung des Lenkzylinders ausgeschaltet, sodass auch bei einem Hydraulikleck im Lenkungssystem eine Notbetätigung möglich bleibt.

Um die hydraulische Schaltung vor einer Überlastung bzw. Überdruck zu schützen, können die beiden von den Pumpenräumen zu den Arbeitsräumen führenden Druckleitungen über jeweils ein Druckbegrenzerventil mit einem Tank verbunden sein. Wäre beispielsweise die Lenkung mechanisch blockiert, so könnte bei Betätigung der Handpumpe bei Erreichen eines kritischen Drucks dieser über das jeweilige Druckbegrenzerventil zum Tank hin abgeführt werden, sodass es nicht zum Bersten einer Leitung oder dergleichen kommen kann.

Als weitere Anwendung der erfindungsgemäßen Pumpe kommt z.B. die Betätigung einer Fahrerhauskippanlage eines Lastkraftwagens in Frage. Die Pumpe kann folglich in einer hydraulischen Schaltung zur Ansteuerung eines Fahrerhauskippzylinders zum Einsatz kommen.

Weitere Vorteile und Ausgestaltungen sind der Beschreibung der nachfolgenden Ausführungsbeispiele anhand der Zeichnungen zu entnehmen. Es zeigt:
- Figur 1: einen Hydraulikplan einer nicht erfindungsgemäßen hydraulischen Schaltung mit Handpumpe,
- Figur 2: eine Ausführungsform eines Pumpkolbens mit zum Tank führendem seitlichen Abgang im Bereich der Endlage des Pumpkolbens und
- Figur 3: eine Variante mit als Wechselventile ausgeführte entsperrbare Rückschlagventile zum Anschluss des Lenkzylinders an eine hydraulische Lenkungsschaltung.

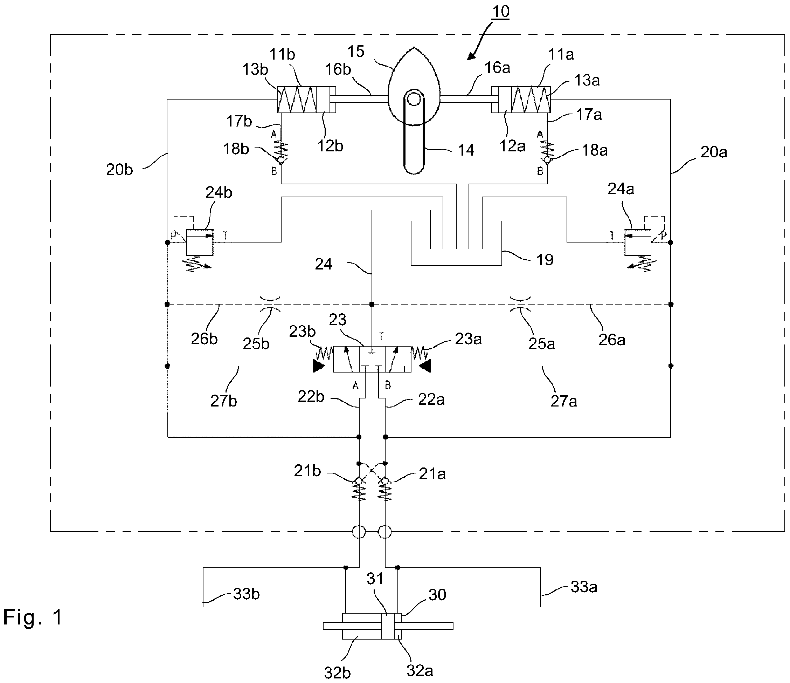

Die in Figur 1 gezeigte nicht erfindungsgemäße Hydraulikschaltung umfasst eine als Kolbenpumpe ausgebildete Handpumpe 10 mit zwei Pumpzylindern 11a, 11b, die jeweils einen Pumpenraum bilden, in dem ein als Pumpelement wirkender Pumpkolben 12a, 12b längsbeweglich angeordnet ist. Dieser wird in Richtung seiner hinteren Endlage (Ruheposition) über eine Rückstellfeder 13a, 13b angefedert. Betätigt wird die Handpumpe 10 über einen Bedienhebel 14, der mit einem Exzenter 15 verbunden ist. An dem Exzenter 15 liegen die beiden von den Pumpkolben 12a, 12b getragene Kolbenstangen 16a, 16b an, sodass durch Auslenkung des Exzenters im Uhrzeigersinn die Kolbenstange 16a eingeschoben wird und durch Auslenkung aus der Mittelstellung gegen den Uhrzeigersinn die gegenüberliegende Kolbenstange 16b eingeschoben wird. In den Pumpzylinder 11a, 11b mündet jeweils eine Ansaugleitung 17a, 17b, die mit einem Ansaugrückschlagventil 18a, 18b versehen ist und zu einem Tank 19 führt.

Die Pumpe 10 ist mit einem Lenkzylinder 30 verbunden. Dieser besitzt einen längsverschieblich dichtend gelagerten Kolben 31, der beiderseits je eine Kolbenstange trägt. Der Kolben 31 unterteilt den Innenraum des Lenkzylinders 30 in zwei Arbeitsräume 32a, 32b. Jeder dieser Arbeitsräume 32a, 32b ist über eine entsprechende Druckleitung 20a, 20b mit einem der Pumpzylinder 11a, 11b verbunden. In den Druckleitungen 20a, 20b ist jeweils ein hydraulisch entsperrbares Rückschlagventil 21a, 21b angeordnet. Die Steuerleitungen der beiden entsperrbaren Rückschlagventile 21a, 21b sind über Kreuz mit der jeweils anderen Druckleitung 20b, 20a verbunden.

Vor den beiden entsperrbaren Rückschlagventilen 21a, 21b zweigt von den Druckleitungen 20a, 20b jeweils eine Leitung 22a, 22b ab, die zu einem als Ausspeiseventil dienenden Wegeventil 23 führt. Das Wegeventil 23 sperrt in der in Figur 1 gezeigten Neutralstellung die Leitungen 22a, 22b ab. In den beiden anderen Schaltstellungen verbindet das Wegeventil 23 jeweils eine der Leitungen 22a, 22b mit einer Tankrückleitung 24, während die jeweils andere der Leitungen 22a, 22b abgesperrt ist. Das Wegeventil 23 ist als vordruckgesteuertes Schieberventil ausgeführt. Seine beiden Steueranschlüsse sind über Steuerleitungen 27a, 27b jeweils mit den Druckleitungen 20a, 20b verbunden. Außerdem ist das Wegeventil 23 über Rückstellfedern 23a, 23b in Richtung seiner mittleren Neutralstellung federbelastet, sodass es im drucklosen Zustand in die gesperrte Mittelstellung schaltet.

Von den beiden Druckleitungen 20a, 20b zweigen außerdem jeweils eine Leitung mit einem als Überlastventil wirkenden Druckbegrenzerventil 24a, 24b ab, die jeweils zu dem Tank 19 führen. Im Falle kritischer Druckspritzen in einer der Druckleitungen 20a, 20b öffnet das betreffende Druckbegrenzerventil 24a, 24b und lässt den Überdruck in Richtung Tank 19 entweichen.

Schließlich zweigen von den Druckleitungen 20a, 20b weitere, mit der Tankrückleitung verbundene Entlastungsleitungen 26a, 26b ab, in denen sich jeweils eine Drossel bzw. Entlastungsdüse 25a, 25b befindet. Über diese Entlastungsleitungen 26a, 26b wird am Ende einer Betätigung der Handpumpe 10 der Druck in der Schaltung wieder abgebaut, sodass das Ausspeiseventil 23 in die geschlossene Mittelstellung übergeht und die entsperrbaren Rückschlagventile 21a, 21b in ihre Sperrstellung wechseln.

Die Funktion der Hydraulikschaltung ist folgendermaßen: Wird der Bedienhebel 14 der Handpumpe 10 aus der Mittelstellung nach links bewegt, so wird über den Exzenter 15 die Kolbenstange 16a des Pumpkolbens 12a eingeschoben. Hydraulikflüssigkeit im Pumpenraum 11a wird in die Druckleitung 20a verschoben und schaltet zunächst über die betreffende Steuerleitung 27a das Umschaltventil 23 in die rechte Schaltstellung, in welcher der Arbeitsraum 32b des Lenkzylinders 30 über das entsperrbare Rückschlagventil 21b mit der Tankrückleitung 24 verbunden ist. Eine weitere Betätigung der Handpumpe 10 führt zu einem Druckanstieg in der Druckleitung 20a, sodass nun das entsperrbare Rückschlagventil 21b öffnet. Dies wird dadurch erreicht, dass die Rückstellfeder 23b des Umschaltventils 23 schwächer ausgeführt ist als die Schließfeder des Rückschlagventils 21b. Nun fließt Hydraulikflüssigkeit aus der Druckleitung 20a über das Rückschlagventil 21a in den Arbeitsraum 32a des Lenkzylinders 30. Aus dem Arbeitsraum 32b kann Hydraulikflüssigkeit über das geöffnete Rückschlagventil 21b und das Ausspeiseventil 23 in den Tank 19 verdrängt werden. Somit bewegt sich der Kolben 31 des Lenkzylinders 30 nach links.

Wird der Bedienhebel 14 wieder in die Mittelstellung zurückverstellt, so bewegt die Rückstellfeder im Pumpenraum 11a den Pumpkolben 12a zurück in seine Ausgangsstellung. Hierbei wird Hydraulikflüssigkeit über das Ansaugrückschlagventil 18a aus dem Tank in den Pumpenraum 11a nachgesaugt. Die Pumpbewegung mit dem Bedienhebel 14 aus der Mittelstellung bis zum linken Anschlag und zurück kann beliebig oft wiederholt werden, bis die gewünschte Lenkstellung des Lenkzylinders 30 erreicht ist. Sobald die Handpumpe 10 unbetätigt bleibt, kann in der Druckleitung 20a verbliebener Restdruck über die Drossel 25a in Richtung Tank 19 entweichen, sodass die Druckleitung 20a wieder drucklos ist. Daraufhin schaltet das entsperrbare Rückschlagventil 21b wieder in den gesperrten Zustand und das Ausspeiseventil 23 in seinen gesperrten Mittelzustand. Die Hydraulikschaltung beeinflusst somit die weitere Lage und Auslenkung des Lenkzylinders 30 nicht weiter. Dieser kann vielmehr von dem über die Leitung 33a, 33b angeschlossenen normalen Lenksystem betätigt werden.

Bei einer Auslenkung des Bedienhebels 14 aus der Mittelstellung nach rechts wird in gleicher Weise wie zuvor beschrieben nun der Pumpkolben 12b betätigt und über die Druckleitung 20b der Lenkzylinder bzw. dessen Kolben 31 nach rechts gestellt. Somit ist die Auslenkung des Bedienhebels 14 in eindeutiger Weise mit einem Lenkaufschlag am Lenkzylinder 30 verknüpft, sodass sich eine besonders einfache und intuitive Bedienung ergibt.

Die Funktion der Schaltung dient vor allem zum Notbetrieb der hydraulischen Lenkung, beispielsweise im Falles eines Ausfalles des hydraulischen Lenksystems. Insbesondere kann über die Schaltung ein ausgelenkter Lenkzylinder 30 in seine Mittelstellung zurück verstellt werden, ohne das Fahrzeug bewegen zu müssen. Dies ist insbesondere sinnvoll bei einer hydraulischen Hinterachslenkung, die im Fehlerfalle im Mittelzustand arretiert wird (sicherer Ausfallzustand). Somit kann über die Handpumpe auch bei Verlust von Hydraulikflüssigkeit im eigentlichen hydraulischen Lenksystem die Lenkung in die Geradeausstellung gebracht und dort arretiert werden.

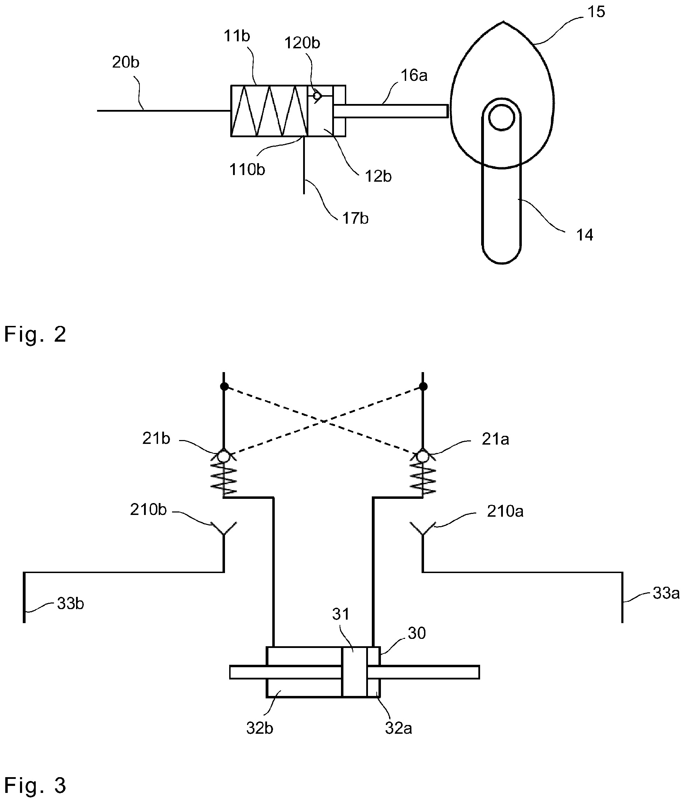

In Figur 2 ist eine erfindungsgemäße Ausführungsform eines Pumpzylinders 11b dargestellt, der in der in Figur 1 gezeigten Handpumpe 10 zum Einsatz kommen kann. Das Besondere hierbei ist, dass die Tankleitung 17b im Bereich einer Endlage des Pumpkolbens 12b über einen Seitenabzweig 110b in den Pumpzylinder 11b mündet. In seiner in Figur 2 gezeigten vollständig nach rechts verstellten Endlage gibt der Pumpkolben 12b den Seitenabzweig 110b und damit die Tankrückleitung 17b frei. In dieser Stellung des Pumpkolbens 12b besteht über den Innenraum des Pumpzylinders 11b eine direkte Verbindung zwischen der Druckleitung 20b und der Tankleitung 17b. Somit kann auf ein Ausspeiseventil 23 wie in Figur 1 gezeigt verzichtet werden, da bei einer Betätigung des gegenüberliegenden Pumpkolbens 12a Hydraulikflüssigkeit aus dem zweiten Arbeitsraum 32b des Lenkzylinders 30 über den Innenraum des Pumpzylinders 11b in Richtung Tank 19 zurückfließen kann. Auf ein Ansaugrückschlagventil 18b wie in Figur 1 gezeigt, kann somit ebenfalls verzichtet werden. Damit der Pumpkolben 12b nach Überstreichen des Seitenabzweigs 110b vollständig in seine Endlage gelangen kann, ist in den Pumpkolben 12b ein Rückschlagventil 120b integriert, über welches in dem Totraum zwischen Seitenabzweig 110b und dem Endanschlag befindliches Hydraulikmittel entweichen kann. Außerdem wird dadurch vermieden, dass sich im linken Bereich des Pumpzylinders 11b beim Zurückfedern ein Unterduck aufbaut, sondern sofort Hydrauliköl aus dem Tank 19 nachströmen kann. Alternativ kann auch eine nachsaugende Kolbendichtung verwendet werden oder im Bereich der Endlage eine zweite zum Tank 19 führende Entlastungsleitung angeordnet sein. In letzterem Fall kann zusätzlich ein Nachsaugventil 18a, 18b vorgesehen sein, um die vorstehend erläuterte Nachsaugfunktion zu realisieren.

In der vollständig zurückgefahrenen Endstellung der Pumpkolben 12a, 12b (Neutralstellung) sind somit die Innenräume beider Pumpzylinder 11a, 11b mit dem gemeinsamen Tank 19 verbunden. Bei Verzicht auf die in Figur 1 gezeigten Ansaugrückschlagventile 18a, 18b sind somit in der Neutralstellung beider Pumpkolben 12a, 12b auch die Druckleitungen 20a, 20b mit dem Tank 19 verbunden. Bei einer Auslenkung eines der Pumpkolben 12a, 12b entsteht ein gewisser Leerhub, bis der jeweilige Pumpkolben 12a, 12b über den Seitenabzweig 110a, 110b hinweggefahren ist. Ab dort beginnt dann der Pump- bzw. Arbeitshub des Pumpzylinders 12a, 12b.

Somit wird kein weiteres Ventil benötigt, das durch den Bediener betätigt werden muss, um eine Auslenkung des an die Schaltung angeschlossenen Lenkzylinders 30 zu ermöglichen. Über die beiden entsperrbaren Rückschlagventile 21a, 21b wird im unbetätigten Zustand die Lage des Kolbens 31 im Lenkzylinder 30 dennoch sicher gehalten. Bei einer Betätigung des angeschlossenen Lenksystems kann darüber hinaus keine Hydraulikflüssigkeit in Richtung der Druckleitung 20a, 20b bzw. in Richtung zum Tank 19 verschoben werden. Somit ist die Hydraulikschaltung mit der Pumpe 10 von einem an dem Lenkzylinder 30 angeschlossenen hydraulischen Lenkung weitestgehend entkoppelt.

Figur 3 zeigt eine Variante der Anbindung der Handpumpe 10 an das über die Anschlüsse 33a, 33b mit dem Lenkzylinder 30 verbundenen hydraulischen Lenksystem. Die entsperrbaren Rückschlagventile 21a, 21b haben hierbei eine Wechselventilfunktionalität integriert.

Ein Wechselventil ist ein pneumatisches oder hydraulisches Ventil mit zwei Eingängen und einem Ausgang. Das Wechselventil stellt die technische Umsetzung einer nicht-ausschließenden ODER-Verknüpfung im Bereich der Pneumatik und Hydraulik dar. Das Wechselventil besteht aus einem Gehäuse mit zwei Eingangsanschlüssen, einem Ausgangsanschluss und einem meist kugelförmigen Schaltkörper. Das Wechselventil hat somit nur zwei definierte Schaltstellungen. In jeder davon wird immer ein Eingang vom Schaltkörper gesperrt, sodass ein Hydraulikfluss zwischen den Eingängen unterbunden ist.

Wird über eine der Druckleitungen 20a, 20b Druck angelegt, so wird das Sperrelement des jeweiligen Rückschlagventils 21a, 21b gegen einen zweiten, gegenüberliegenden Ventilsitz 210a, 210b gedrückt, sodass über die Leitungen 33a, 33b keine Hydraulikflüssigkeit entweichen kann. Hierdurch wird sichergestellt, dass im Handbetrieb der Pumpe 10 jegliche Undichtigkeitsfehler im angeschlossenen hydraulischen Lenksystem (Zylindersteuerung) egalisiert werden. Somit kann der Kolben 31 des Lenkzylinders 30 auch bei Verlust von Hydraulikflüssigkeit im hydraulischen Lenksystem über die mechanische Handpumpe 10 verstellt werden.

## Patentansprüche

1. Pumpe, insbesondere handbetätigbare Pumpe (10) für einen Hydraulik- oder Pneumatikzylinder (30) mit zwei druckbeaufschlagbaren Arbeitsräumen (32a, 32b), insbesondere einen Lenkzylinder,
wobei die Pumpe (10) zwei Pumpenräume (11a, 11b) mit je einem in dem zugehörigen Pumpenraum beweglichen Pumpelement (12a, 12b) und ein die Pumpelemente (12a, 12b) ansteuerndes Betätigungselement (14) aufweist, wobei jeder der beiden Pumpenräume (11a, 11b) einen mit jeweils einem der Arbeitsräume (32a, 32b) zu verbindenden Druckanschluss besitzt, und das Betätigungselement (14) mit den beiden Pumpelementen (12a, 12b) derart wirkverbunden ist, dass bei Auslenkung des Betätigungselements (14) in eine erste Richtung nur ein erstes der beiden Pumpelemente (12a) und bei Auslenkung in eine zweite Richtung nur das zweite der Pumpelemente (12b) angesteuert wird,
wobei die Pumpe als Kolben- oder Plungerpumpe mit zwei separaten Pumpzylindern (11a, 11b) und zugehörigen Pumpkolben (12a, 12b) ausgebildet ist,
**dadurch gekennzeichnet, dass**
die beiden Pumpzylinder (11a, 11b) jeweils einen mit einer Tankrückleitung zu verbindenden Seitenabgang (110b) im Bereich einer hinteren Endlage des zugehörigen Pumpkolbens (12a, 12b) aufweisen, der freigegeben wird, wenn sich der Pumpkolben (12a, 12b) in seiner hinteren Endlage befindet.

2. Pumpe nach Anspruch 1, bei der die Pumpkolben (12a, 12b) ein integriertes Rückschlagventil (120b) oder eine nachsaugende Kolbendichtung aufweisen, sodass in einem Totraum zwischen dem Seitenabgang (110b) und der hinteren Endlage des Pumpkolbens (12a, 12b) befindliches Hydraulikmedium bei einer Rückbewegung des Pumpkolbens (12a, 12b) verdrängt und/oder Hydraulikflüssigkeit nachgesaugt werden kann.

3. Pumpe nach einem der vorangehenden Ansprüche, bei dem das Betätigungselement als Handbetätigungselement (14), insbesondere als Hebel ausgeführt ist, das aus einer Mittelstellung in eine erste und eine entgegengesetzte zweite Richtung auslenkbar ist und hierbei je nach Auslenkungsrichtung entweder das erste oder das zweite Pumpelement (12a, 12b) ansteuert.

4. Pumpe nach Anspruch 3, bei dem der Hebel (14) die Pumpelemente (12a, 12b) über einen Exzenter (15) ansteuert.

5. Hydraulische Schaltung für eine hydraulische Lenkung, mit einem Lenkzylinder (30), der einen Zylinderraum, einen dichtend in dem Zylinderraum gelagerten Kolben (31), der den Zylinderraum in zwei Arbeitsräume (32a, 32b) unterteilt, und mindestens eine von dem Kolben (31) getragene Kolbenstange umfasst, und mit einer Pumpe (10) nach einem der Ansprüche 2 bis 4, zur Auslenkung des Kolbens (31) in wahlweise die eine oder andere Hubrichtung,
wobei die Pumpe (10) zwei Pumpenräume (11a, 11b) mit je einem in dem zugehörigen Pumpenraum (11a, 11b) beweglichen Pumpelement (12a, 12b) und ein die Pumpelemente (12a, 12b) ansteuerndes Betätigungselement (14) aufweist, wobei jeder der beiden Pumpenräume (11a, 11b) einen Druckanschluss besitzt, und der Druckanschluss eines ersten der Pumpenräume (11a) mit einem ersten der Arbeitsräume (32a) des Hydraulikzylinders (30) und der Druckanschluss des zweiten Pumpenraums (11b) mit dem zweiten Arbeitsraum (32b) verbunden sind, und das Betätigungselement (14) mit den beiden Pumpelementen (12a, 12b) derart wirkverbunden ist, dass bei Auslenkung des Betätigungselement (14) in eine erste Richtung nur ein erstes der beiden Pumpelemente (12a) und bei Auslenkung in eine zweite Richtung nur das zweite der Pumpelemente (12b) angesteuert wird und
wobei Anschlüsse (33a, 33b) zur Verbindung des Lenkzylinders (30) mit einem hydraulischen Primärkreislauf der Lenkung vorgesehen sind und in den beiden vom den Pumpenräumen (11a, 11b) zu den Arbeitsräumen (32a, 32b) führenden Druckleitungen (20a, 20b) jeweils ein den hydraulischen Primärkreislauf von der hydraulischen Schaltung entkoppelndes, in Richtung des jeweiligen Arbeitsraums (32a, 32b) öffnendes, hydraulisch entsperrbares Rückschlagventil (21a, 21b) angeordnet ist, und Steueranschlüsse der beiden Rückschlagventile über Kreuz mit der jeweils anderen Druckleitung (20a, 20b) verbunden sind.

6. Hydraulische Schaltung nach Anspruch 5, bei der die beiden hydraulisch entsperrbaren Rückschlagventile (21a, 21b) als Wechselventile mit jeweils einem zweiten Druckanschluss (210a, 210b) ausgeführt sind, und an die beiden zweiten Druckanschlüsse der Wechselventile eine hydraulische Schaltung, insbesondere Lenkungsschaltung, mit einer Druckversorgungseinheit angeschlossen ist, über die die Arbeitsräume (32a, 32b) des Lenkzylinders (30) gesteuert mit Hydraulikdruck beaufschlagt werden können.

7. Hydraulische Schaltung nach einem der Ansprüche 5 oder 6, bei der die beiden vom den Pumpenräumen (11a, 11b) zu den Arbeitsräumen (32a, 32b) führenden Druckleitungen (20a, 20b) über jeweils ein Druckbegrenzerventil (23a, 23b) mit einem Tank (19) verbunden sind.

## Claims

1. Pump, in particular a hand-operated pump (10) for a hydraulic or pneumatic cylinder (30) with two pressurized working chambers (32a, 32b), in particular a steering cylinder,
wherein the pump (10) has two pump chambers (11a, 11b) each with a movable pump element (12a, 12b) in the associated pump chamber and an actuating element (14) controlling the pump elements (12a, 12b), wherein each of the two pump chambers (11a, 11b) has a pressure connection for connection, in each case, to one of the working chambers (32a, 32b), and the actuating element (14) is operatively connected to the two pump elements (12a, 12b) such that on displacement of the actuating element (14) in a first direction only a first of the two pump elements (12a) is controlled and on displacement in a second direction only the second of the pump elements (12b) is controlled,
wherein the pump is designed as a piston or plunger pump with two separate pump cylinders (11a, 11b) and the associated pump pistons (12a, 12b),
**characterized in that**
the two pump cylinders (11a, 11b) each have a side branch (110b) for connection to a tank return line in the region of a retracted end position of the associated pump piston (12a, 12b), which is released when the pump piston (12a, 12b) is in its retracted end position.

2. Pump according to claim 1, in which the pump pistons (12a, 12b) have an integrated check valve (120b) or a suction piston seal such that hydraulic medium in a dead space between the side branch (110b) and the retracted end position of the pump piston (12a, 12b) can be forced out with a return movement of the pump piston (12a, 12b) and/or hydraulic fluid can be sucked in.

3. Pump according to any one of the preceding claims, in which the actuating element is configured as a manual actuating element (14), in particular as a lever, which can be displaced from a central position into a first and an opposite second direction and thus controls either the first or the second pump element (12a, 12b) depending on the displacement direction.

4. Pump according to claim 3, in which the lever (14) controls the pump elements (12a, 12b) through a cam (15).

5. Hydraulic circuit for a hydraulic steering system, with a steering cylinder (30), which comprises a cylinder chamber, a piston (31) mounted in a sealing manner in the cylinder chamber, which divides the cylinder chamber into two working chambers (32a, 32b), and at least one piston rod supported by the piston (31), and a pump (10) according to any one of claims 2 to 4, for displacing the piston (31) in one or other stroke direction,
wherein the pump (10) has two pump chambers (11a, 11b) each with a movable pump element (12a, 12b) in the associated pump chamber (11a, 11b) and an actuating element (14) controlling the pump elements (12a, 12b), wherein each of the two pump chambers (11a, 11b) has a pressure connection, and the pressure connection of a first of the pump chambers (11a) is connected to a first of the working chambers (32a) of the hydraulic cylinder (30) and the pressure connection of the second pump chamber (11b) is connected to the second working chamber (32b), and the actuating element (14) is operatively connected to the two pump elements (12a, 12b) such that on displacement of the actuating element (14) in a first direction only a first of the two pump elements (12a) is controlled and on displacement in a second direction only the second of the pump elements (12b) is controlled and
wherein connections (33a, 33b) for connecting the steering cylinder (30) to a hydraulic primary circuit of the steering system are provided and a hydraulically releasable check valve (21a, 21b) decoupling the hydraulic primary circuit from the hydraulic circuit opening in the direction of the respective working chambers (32a, 32b) is arranged in each of the two pressure lines (20a, 20b) leading from the pump chambers (11a, 11b) to the working chambers (32a, 32b), and control connections of the two check valves are connected crosswise to the respective other pressure line (20a, 20b).

6. Hydraulic circuit according to claim 5, in which the two hydraulically releasable check valves (21a, 21b) are configured as change-over valves each with a second pressure connection (210a, 210b), and a hydraulic circuit, in particular a steering circuit, with a pressure supply unit is connected to the two second pressure connections of the change-over valves, through which hydraulic pressure can be applied to the working chambers (32a, 32b) of the steering cylinder (30) in a controlled manner.

7. Hydraulic circuit according to any one of claims 5 or 6, in which the two pressure lines (20a, 20b) leading from the pump chambers (11a, 11b) to the working chambers (32a, 32b) are each connected to a tank (19) through a pressure relief valve (23a, 23b).

## Revendications

1. Pompe, en particulier pompe à commande manuelle (10) pour un vérin hydraulique ou pneumatique (30) avec deux chambres de travail (32a, 32b) pouvant être mises sous pression, en particulier un vérin de direction,
dans laquelle la pompe (10) présente deux chambres de pompe (11a, 11b) avec chacune un élément de pompe (12a, 12b) mobile dans la chambre de pompe correspondante et un élément d'actionnement (14) commandant les éléments de pompe (12a, 12b), dans laquelle chacune des deux chambres de pompe (11a, 11b) comporte un raccord de pression à connecter respectivement à l'une des chambres de travail (32a, 32b), et l'élément d'actionnement (14) est en liaison active avec les deux éléments de pompe (12a, 12b) de sorte que, lors d'une déviation de l'élément d'actionnement (14) dans une première direction, seul un premier des deux éléments de pompe (12a) est commandé et, lors d'une déviation dans une seconde direction, seul le second des éléments de pompe (12b) est commandé,
dans laquelle la pompe est conçue en tant que pompe à piston ou à plongeur avec deux vérins de pompe séparés (11a, 11b) et des pistons de pompe (12a, 12b) correspondants,
**caractérisé en ce que**
les deux vérins de pompe (11a, 11b) présentent respectivement une sortie latérale (110b) à connecter à une conduite de retour de réservoir au niveau d'une position finale arrière du piston de pompe (12a, 12b) correspondant qui est libéré lorsque le piston de pompe (12a, 12b) se trouve dans sa position finale arrière.

2. Pompe selon la revendication 1, dans laquelle les pistons de pompe (12a, 12b) présentent un clapet antiretour intégré (120b) ou un joint de piston aspirant, de sorte que le milieu hydraulique se trouvant dans un espace mort entre la sortie latérale (110b) et la position finale arrière du piston de pompe (12a, 12b) peut être évincé avec un mouvement de retour du piston de pompe (12a, 12b) et/ou du liquide hydraulique peut être aspiré.

3. Pompe selon l'une quelconque des revendications précédentes, dans laquelle l'élément d'actionnement est réalisé en tant qu'élément d'actionnement manuel (14), en particulier en tant que levier, qui peut être dévié d'une position centrale dans une première direction et une seconde direction opposée et commande à cet effet soit le premier soit le second élément de pompe (12a, 12b) en fonction de la direction de déviation.

4. Pompe selon la revendication 3, dans laquelle le levier (14) commande les éléments de pompe (12a, 12b) par l'intermédiaire d'un excentrique (15).

5. Circuit hydraulique pour une direction hydraulique, avec un vérin de direction (30), qui comprend une chambre de vérin, un piston (31) monté de manière étanche dans la chambre de vérin et divise la chambre de vérin en deux chambres de travail (32a, 32b), et au moins une tige de piston portée par le piston (31), et avec une pompe (10) selon l'une quelconque des revendications 2 à 4, pour dévier le piston (31) au choix dans l'une ou l'autre direction de course,
dans lequel la pompe (10) présente deux chambres de pompe (11a, 11b) avec chacune un élément de pompe (12a, 12b) mobile dans la chambre de pompe (11a, 11b) correspondante et un élément d'actionnement (14) commandant les éléments de pompe (12a, 12b), dans lequel chacune des deux chambres de pompe (11a, 11b) comporte un raccord de pression, et le raccord de pression d'une première des chambres de pompe (11a) est connecté à une première des chambres de travail (32a) du vérin hydraulique (30) et le raccord de pression de la seconde chambre de pompe (11b) est connecté à la seconde chambre de travail (32b), et l'élément d'actionnement (14) est en liaison active avec les deux éléments de pompe (12a, 12b) de sorte que, lors d'une déviation de l'élément d'actionnement (14) dans une première direction, seul un premier des deux éléments de pompe (12a) est commandé et, lors d'une déviation dans une seconde direction, seul le second des éléments de pompe (12b) est commandé, et
dans lequel des raccords (33a, 33b) sont prévus pour connecter le vérin de direction (30) à un circuit primaire hydraulique de la direction et un clapet antiretour déverrouillable hydrauliquement (21a, 21b) est disposé respectivement dans les deux conduites de pression (20a, 20b) menant des chambres de pompe (11a, 11b) aux chambres de travail (32a, 32b), découplant le circuit primaire hydraulique du circuit hydraulique et s'ouvrant en direction de la chambre de travail (32a, 32b) respective, et des raccords de commande des deux clapets antiretour sont connectés en croix à l'autre conduite de pression (20a, 20b) respective.

6. Circuit hydraulique selon la revendication 5, dans lequel les deux clapets antiretour (21a, 21b) déverrouillables hydrauliquement sont réalisés en tant que soupapes de commutation avec respectivement un second raccord de pression (210a, 210b), et un circuit hydraulique, en particulier un circuit de direction, avec une unité d'alimentation en pression, est raccordé aux deux seconds raccords de pression des soupapes de commutation par lesquels les chambres de travail (32a, 32b) du vérin de direction (30) peuvent être soumises à une pression hydraulique de manière contrôlée.

7. Circuit hydraulique selon l'une quelconque des revendications 5 ou 6, dans lequel les deux conduites de pression (20a, 20b) menant des chambres de pompe (11a, 11b) aux chambres de travail (32a, 32b) sont connectées à un réservoir (19) par l'intermédiaire respectivement d'une vanne de limitation de pression (23a, 23b).
